# FASCICULE DE BREVET EUROPEEN

(11) **EP 0 859 156 B1**
(45) Date de publication et mention de la délivrance du brevet: **17.04.2002**
(21) Numéro de dépôt: 98400355.8
(22) Date de dépôt: 16.02.1998
(51) Int. Cl.: F15B 1/10, F16J 3/02, B32B 27/08

(54) **Membrane élastique imperméable aux gaz et accumulateur hydropneumatique équipé de cette membrane**
Elastische, gasundurchlässige Membran und damit ausgestattete hydropneumatische Akkumulatoren
Elastic gas impermeable membrane and hydropneumatic accumulator containing same

(30) Priorité: 17.02.1997 FR 9701802
(43) Date de publication de la demande: 19.08.1998
(73) Titulaire: AUTOMOBILES PEUGEOT, 75116 Paris (FR); AUTOMOBILES CITROEN, 92200 Neuilly-sur-Seine (FR)
(72) Inventeur: Le Rossignol, Benoît, 35000 Rennes (FR); Bonhoure, François, 78150 Le Chesnay (FR)
(74) Mandataire: Robert, Jean-François

(56) Documents cités:
- EP-A- 0 360 648
- FR-A- 2 662 638
- US-A- 4 880 213
- DATABASE WPI Section Ch, Week 8422 Derwent Publications Ltd., London, GB; Class A32, AN 84-137143 XP002045351 & JP 59 070 565 A (TORAY IND INC) , 21 avril 1984

## Description

La présente invention concerne une membrane élastique imperméable, son procédé de fabrication et un accumulateur hydropneumatique équipé de cette membrane et utilisé par exemple dans les suspensions de véhicules automobiles. Un tel accumulateur se présente sous la forme d'une sphère séparée par une membrane en deux compartiments dont l'un contient un gaz tel que l'azote et l'autre contient un liquide comme de l'huile minérale. Sous l'effet de la pression d'huile, la membrane se déforme et comprime le gaz.

Les principales caractéristiques de la membrane sont la souplesse, l'élasticité, l'imperméabilité à l'azote, l'étanchéité et la résistance au liquide hydraulique minéral.

On utilise actuellement deux types de membranes à base de polyuréthane, par exemple un polyuréthane thermoplastique tel que le DESMOPAN® de BAYER ou un polyuréthane associé à du caoutchouc tel que l'UREPAN®. La tenue en endurance de ces membranes est satisfaisante, mais elles présentent un inconvénient en ce qui concerne la faible imperméabilité à l'azote du polyuréthane. Cette faible imperméabilité entraîne une durée de vie limitée des accumulateurs. Ainsi, après trois ans d'utilisation sur un véhicule, il y a une perte de prés de la moitié de la pression de tarage.

On a cherché à améliorer l'imperméabilité à l'azote des membranes. On a décrit notamment une membrane ayant une imperméabilité deux fois plus élevée que celle à base de polyuréthane, dans le document EP-A-360 648. Cette membrane comporte en association deux matériaux, le premier matériau conférant à la membrane l'élasticité requise et étant choisi parmi les polyuréthanes thermoplastiques, les polyéthers blocs amides, les polyesters souples ou un mélange de ceux-ci, le deuxième matériau étant noyé dans la masse du premier matériau pour réaliser l'imperméabilité aux gaz et choisi parmi un copolymère d'éthylène-alcool vinylique, les polyamides, le polychlorure de vinylidène ou un mélange de ceux-ci.

Lorsqu'on utilise comme deuxième matériau un copolymère d'éthylène-alcool vinylique, il est mélangé avec un polyéther bloc amide et le premier matériau est un polyuréthane thermoplastique. L'épaisseur du film est alors typiquement comprise entre 10 et 200 micromètres.

De nouveaux accumulateurs hydropneumatiques sont apparus récemment dans le commerce. Ils sont décrits dans le document FR-A-2 662 638. Ils comportent deux compartiments séparés par une membrane multicouche résistant au froid et formant barrière de gaz. Le film formant barrière aux gaz est du type alcool polyvinylique placé entre deux feuilles de caoutchouc. Le rôle du caoutchouc est d'assurer l'étanchéité de la fixation de la membrane dans l'accumulateur. Le film d'alcool polyvinylique contient un plastifiant du type polyol, par exemple de la glycérine, selon un pourcentage de 15 à 50 % en poids.

Ces nouvelle membranes donnent satisfaction, mais du fait que le plastifiant peut migrer ou se volatiliser, notamment en cas d'utilisation à des températures élevées, il est nécessaire d'interposer entre le film d'alcool polyvinylique et le caoutchouc, une pellicule de résine imperméable aux vapeurs et aux plastifiants, par exemple une pellicule en polyéthylène. De plus, ces membranes nécessitent des conditions de stockage et de manipulation particulières, du fait de la présence de plastifiant.

Le document FR-A-2 685 740 décrit des membranes souples pour accumulateurs hydropneumatiques, qui sont constituées d'une couche (1) de copolymère éthylène/alcool vinylique (EVOH) disposée entre deux couches de polyamide (2), le tricouche étant lui même recouvert sur chaque face d'une couche de caoutchouc NBR (3). Pour assouplir les couches de polyamide (2), il est nécessaire d'y ajouter de l'EPDM. L'adhérence des couches (2) sur la couche (1) n'est pas bonne. Il est aussi nécessaire de mettre un adhésif entre les couches (2) et (3).

L'invention a pour but de proposer une membrane pour accumulateur hydropneumatique qui permet d'éviter les inconvénients mentionnés ci-dessus et qui ait une grande stabilité au vieillissement à température élevée.

L'invention a donc pour objet un accumulateur hydropneumatique conformément à la revendication 1 des groupes -OH.

Les membranes selon l'invention sont imperméables et thermoformables, elles ont une bonne tenue à la chaleur, une faible rigidification à froid, elles sont souples dans un grand domaine de température sans qu'il soit nécessaire d'ajouter des plastifiants dans la pellicule imperméable aux gaz, ni dans les couches du copolymère à blocs polyamides et blocs polyéthers. De plus, selon les types de copolymères de caoutchouc utilisés, aucun adhésif ou liant n'est nécessaire.

Selon une autre caractéristique de l'invention, le copolymère imperméable aux gaz est un copolymère d'un monomère de formule CH₂ = CH - R dans laquelle R est H ou un groupe alkyle, avec un monomère de formule CH₂ = CH -(R')ₓ OH dans laquelle x est égal à 0 ou 1 et R' est un groupe alkyle, et plus particulièrement un copolymère d'éthylène et d'alcool vinylique.

Selon une forme avantageuse, la membrane de l'invention comprend un revêtement de caoutchouc sur au moins l'une de ses faces et de préférence sur les deux faces.

Selon d'autres caractéristiques de l'invention :
- le caoutchouc est par exemple un caoutchouc nitrile et comporte des groupes fonctionnels carboxyliques, amino ou époxy,
- le caoutchouc est par exemple un copolymère du 1,3- butadiène, de l'acrylonitrile et de l'acide acrylique,
- la température de fusion du film formé par la pellicule et les couches du matériau souple et élastique est supérieure à 160 °C,
- l'épaisseur de la pellicule est comprise entre 25 et 100 micromètres,
- l'épaisseur de chaque couche du matériau souple et du caoutchouc est comprise entre 200 et 600 micromètres.

L'invention concerne en outre un procédé de fabrication d'une telle membrane.

Le procédé consiste à effectuer une coextrusion de la pellicule et des couches pour obtenir un film, un séchage éventuel pour éliminer l'eau des couches, puis éventuellement un thermoformage pour donner la forme désirée au film et un moulage avec vulcanisation du caoutchouc.

On peut disposer un liant de coextrusion entre la pellicule et les couches du matériau souple et élastique.

Le séchage est fait de préférence pendant 24 h à 70 °C.

Le moulage avec le caoutchouc est réalisé à une température inférieure à la température de fusion du film formé par la pellicule et les couches.

La liaison entre le caoutchouc et le film peut être réalisée au moyen d'un adhésif préalablement déposé sur les faces externes du film. Si le caoutchouc possède des groupes fonctionnels, il n'est pas nécessaire d'utiliser un adhésif.

L'adhésif comprend un solvant non polaire du type xylène ou cétone.

Les caractéristiques et avantages de l'invention apparaîtront au cours de la description qui va suivre, donnée uniquement à titre d'exemple et faite en référence aux dessins annexés, sur lesquels:

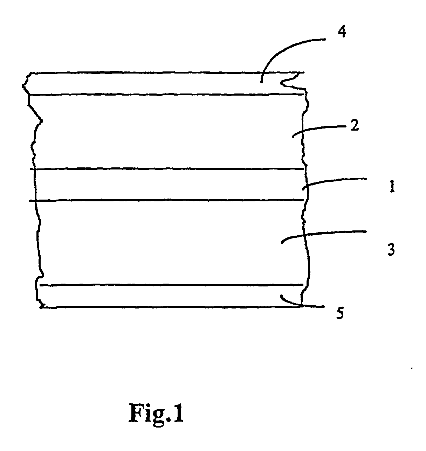

- La figure 1 unique est une vue schématique en coupe de la membrane selon la forme préférée de l'invention.

La membrane représentée sur la figure 1 comprend une pellicule 1 d'un matériau rigide et imperméable aux gaz, plus particulièrement à l'azote. La pellicule 1 est incorporée entre deux couches 2 et 3 constituées d'un matériau souple et élastique.

Le matériau imperméable aux gaz est un copolymère partiellement cristallin comportant des groupes -OH. Avantageusement il comprend des motifs 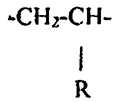 dans lesquels R est H ou un groupe alkyle, et des motifs 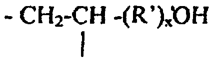 dans lesquels x est égal à 0 ou 1 et R' est un groupe alkyle.

On utilise avantageusement l'EVOH.

L'EVOH est un copolymère constitué essentiellement d'unités éthylène et alcool vinylique et peut contenir de faibles quantités d'autres unités monomères, en particulier d'unité ester de vinyle. Ces copolymères peuvent être obtenus par saponification ou alcoolyse complète ou totale de copolymère éthylène-ester de vinyle. Parmi les esters de vinyle, l'acétate de vinyle est le monomère préféré. Le degré de saponification ou d'alcoolyse est au moins égal en moles à 90 %, et de préférence est compris entre 54 et 99,5 %. La proportion en moles d'éthylène dans l'EVOH est comprise dans l'intervalle de 3 à 75 %, de préférence de 10 à 50 %.

On ne sortirait pas du cadre de l'invention en utilisant des mélanges d'EVOH et de polyoléfine à matrice EVOH. De tels mélanges sont décrits dans les documents EP-A-418 129 et EP-A-441 666 dont le contenu est incorporé dans la présente demande.

On ne sortirait pas non plus du cadre de la présente invention en remplaçant tout ou partie de l'EVOH par de l'EVOH modifié par acylation ou uréthanisation. L'acylation est effectuée par un chlorure d'acide, un acide ou un anhydride, avantageusement par un chlorure d'acide tel que le chlorure de benzoyle. L'uréthanisation est effectuée avantageusement par un isocyanate tel que par exemple le phénylisocyanate ou le benzylisocyanate. De tels produits sont décrits dans la demande WO 95/12624 dont le contenu est incorporé dans la présente demande.

L'EVOH a une excellente imperméabilité aux gaz. Par exemple, si on le compare avec d'autres composés et que l'on mesure sa perméabilité à O₂ à 20 °C (en cc. 20 µ /m², 24h, atm) on obtient les résultats suivants:

| **Composé** | **Perméabilité** |
|---|---|
| Copolymère éthylène/ alcool vinylique (EVOH) | 0,4 à 1,5 |
| alcool polyvinylique (AVAL) | 0,1 |
| alcool polyvinylique plastifié par de la glycérine (35 parties) | 10 |
| polyamide (PA) | 76 |
| polyester (PET) | 69 |

L'EVOH a des propriétés de souplesse et est facile à mettre en oeuvre du fait de la présence du co-monomère éthylène, par rapport aux autres matériaux du type PVAL qui nécessitent un plastifiant pour leur transformation. En effet, le PVAL sans plastifiant se dégrade avant de fondre. Au contraire, l'EVOH peut être utilisé sans plastifiant.

La pellicule 1 est incorporée entre deux couches 2, 3 constituées d'un matériau souple et élastique. On choisit un matériau qui est souple sans utilisation de plastifiant et qui a une excellente tenue à chaud et à froid. Un tel matériau est un copolymère comportant selon l'invention un seul type de blocs polyamides et des blocs polyéthers qu'on appellera PEBA (polyéther bloc amide) dans la suite du texte.

Le rôle de ce matériau est d'apporter de l'épaisseur, sans apporter trop de rigidité au film formé par la pellicule 1 et les couches 2,3. De plus, on utilise les propriétés d'élastomère thermoplastique du PEBA

Les polymères à blocs polyamides et blocs polyéthers résultent de la copolycondensation de séquences polyamides à extrémités réactives avec des séquences polyéthers à extrémités réactives, telles que, entre autres :
1) Séquences polyamides à bouts de chaînes diamines avec des séquences polyoxyalkylènes à bouts de chaînes dicarboxyliques ;
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols ;
3) Séquences polyamides à bouts de chaînes dicarboxyliques avec des polyétherdiols, les produits obtenus étant, dans ce cas particulier, des polyétheresteramides.

Les séquences à bout de chaîne dicarboxyliques proviennent, par exemple, de la condensation d'acides alpha-oméga aminocarboxyliques de lactames ou de diacides carboxyliques et diamines en présence d'un diacide carboxylique limiteur de chaîne. Avantageusement, les blocs polyamides sont en polyamide-12 (PA-12) ou en polyamide-6 (PA-6).

La masse molaire en nombre Mₙ des séquences polyamides est comprise entre 300 et 15 000 et de préférence entre 600 et 5 000. La masse Mₙ des séquences polyéthers est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers, qu'ils proviennent de la copolycondensation de séquences polyamides et polyéthers préparées auparavant ou d'une réaction en une étape, présentent, par exemple, des duretés shore D pouvant être comprises entre 20 et 75 et avantageusement entre 30 et 70 et une viscosité intrinsèque entre 0,8 et 2,5 mesurée dans le métacrésol à 250 °C pour une concentration initiale de 0,8 g/100 ml.

Que les blocs polyéthers dérivent du polyéthylène glycol, du polyoxypropylène glycol ou du polyoxytétraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent aussi être mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le polyéther peut être par exemple un polyéthylène glycol (PEG), un polypropylène glycol (PPG) ou un polytétra méthylène glycol (PTMG). Cc dernier est aussi appelé polytétrahydrofurane (PTHF).

Que les blocs polyéthers soient dans la chaîne du polymère à blocs polyamides et blocs polyéthers sous forme de diols ou de diamines, on les appelle par simplification blocs PEG ou blocs PPG ou encore blocs PTMG.

On ne sortirait pas du cadre de l'invention si les blocs polyéthers contenaient des motifs différents tels que des motifs dérivés de l'éthylène glycol, du propylène glycol ou encore du tétraméthylène glycol.

Selon l'invention, le polymère à blocs polyamides et blocs polyéthers comprend un seul type de blocs polyamides et un seul type de blocs polyéthers. On utilise avantageusement des polymères à blocs PA-12 et blocs PTMG et des polymères à blocs PA-6 et blocs PTMG.

On peut aussi utiliser un mélange de deux ou plusieurs polymères à blocs polyamides et blocs polyéthers.

Selon l'invention, le polymère à blocs polyamides et blocs polyéthers est tel que le polyamide est le constituant majoritaire en poids, la quantité de polyamide et la quantité de polyéther étant dans le rapport (polyamide/polyéther) de 1/1 à 3/1.

Eventuellement on peut disposer un liant de coextrusion entre la pellicule de copolymère imperméable et les couches du matériau souple et élastique.

A titre d'exemple de liant, on peut citer :
- le polyéthylène, le polypropylène, les copolymères de l'éthylène et d'au moins une alpha oléfine, des mélanges de ces polymères, tous ces polymères étant greffés par des anhydrides d'acide carboxyliques insaturés, tels que par exemple l'anhydride maléique. On peut aussi utiliser des mélanges de ces polymères greffés et de ces polymères non greffés.
- les copolymères de l'éthylène avec au moins un produit choisi parmi (i) les acides carboxyliques insaturés, leurs sels, leurs esters, (ii) les esters vinyliques d'acides carboxyliques saturés, (ii) les acides dicarboxyliques insaturés, leurs sels, leurs esters, leurs hémiesters, leurs anhydrides, (iv) les époxydes insaturés ; ces copolymères pouvant être greffés par des anhydrides d'acides dicarboxyliques insaturés tels que l'anhydride maléique ou des époxydes insaturés tels que le méthacrylate de glycidyle.

L'épaisseur de ce liant peut avoir de 15 à 30 µm. Si le PEBA comprend des blocs PA-6 et des blocs PTMG, il n'est pas nécessaire d'utiliser un liant entre les couches de PEBA et la pellicule de copolymère imperméable.

Du fait que le EVOH ne contient pas de plastifiant, le film formé par la pellicule 1 et les couches 2,3, a une excellente stabilité dans le temps et en température. Par exemple, si on compare la stabilité du film PEBA/EVOH/PEBA par rapport à un film d'alcool polyvinylique plastifié par de la glycérine, on obtient les résultats suivants, après une exposition à 100 °C, à l'air, pendant 16 heures:

| | Variation du module 50 | Variation de l'allongement |
|---|---|---|
| Film PEBA/EVOH/PEBA | + 3 % | + 8 % |
| Film PVAL plastifié par la glycérine | + 300 % | - 50 % |

On voit donc que le film selon l'invention est beaucoup plus stable que le film de PVAL plastifié.

De préférence, l'épaisseur de la pellicule 1 est choisie de façon à être la plus faible possible pour que le film ne soit pas trop rigide, mais de façon à être suffisante pour conférer à l'ensemble l'imperméabilité aux gaz. Par exemple, l'épaisseur de la pellicule 1 peul être comprise entre 50 et 200 micromètres.

Si l'on compare un film de PVAL plastifié ayant une épaisseur de 1300 micromètres avec un film selon l'invention constitué dune pellicule de EVOH de 100 micromètres d'épaisseur et de deux couches de PEBA de 600 micromètres chacune, pour des valeurs de module comparables, le niveau de perméabilité aux gaz est du même ordre de grandeur:

| | PVAL plastifié | PEBA/EVOH/PEBA |
|---|---|---|
| Epaisseur (en µm) | 1300 | 600 / 100 / 600 |
| Module 25 % (en MPa) | 14 | 12 |
| Perméabilité (en m² /Pa.s) | 10⁻¹⁸ | 5.10⁻¹⁸ |

De préférence, l'épaisseur de chacune des couches 2,3 est comprise entre 200 et 600 micromètres.

Selon une forme particulière de l'invention, un revètement 4 est placé sur au moins une couche 2 de matériau souple et élastique, mais de préférence chaque couche 2,3 comporte un revètement 4,5. Ce revêtement est en caoutchouc. Le rôle du caoutchouc est d'assurer la tenue au liquide hydraulique, à savoir l'huile minérale, placée dans un compartiment de l'accumulateur hydropneumatique, et d'assurer l'étanchéité de la fixation de la membrane dans cet accumulateur.

A titre d'exemple de caoutchouc, on peut citer le caoutchouc naturel, le polyisoprène ayant un taux élevé de double liaison en position cis, une émulsion polymérisée à base de copolymère styrène/butadiène, un polybutadiène ayant un taux élevé de double liaison en position cis obtenu par catalyse au nickel, cobalt, titane ou néodynium, un terpolymère éthylène halogéné/propylène/diène, un caoutchouc butyle halogéné, un copolymère séquencé styrène/butadiène, un copolymère séquencé styrène/isopropène, les produits halogénés des polymères ci-dessus, un copolymère acrylonitrile/butadiène, un élastomère acrylique, un élastomère fluoré et le chloroprène. On utilise aussi les caoutchoucs épichlorhydrine.

On utilise avantageusement les caoutchoucs fonctionnalisés tels ceux ayant des groupes acides carboxyliques, anhydrides d'acides carboxyliques, époxydes ou amines. On préfère les groupes carboxyles ou anhydrides.

Dans le cas où les élastomères mentionnés ci-dessus ne comportent pas de radicaux acide carboxylique ou anhydride desdits acides (ce qui est le cas de la plupart de ceux-ci), lesdits radicaux seront apportés par greffage, de façon connue, des élastomères mentionnés ci-dessus ou par des mélanges d'élastomères, par exemple avec des élastomères contenant de l'acide acrylique greffé ou copolymérisé.

Parmi les élastomères mentionnés ci-dessus, on choisira avantageusement ceux compris dans le groupe suivant: les élastomères nitriles carboxylés, les élastomères acryliques carboxylés, les polybutadiènes carboxylés, les terpolymères éthylène/propylène/diène greffés ou les mélanges de ces polymères avec les mêmes élastomères mais non greffés comme les caoutchoucs nitriles, les polybutadiènes, les terpolymères éthylène/propylène/diène, seuls ou en mélange .

De préférence, les élastomères vulcanisables précités comportent un taux en poids de radicaux acide carboxylique ou anhydride de diacide carboxylique compris entre 0,3 et 10 % par rapport auxdits élastomères.

Les systèmes de vulcanisation convenant pour la présente invention sont bien connus de l'homme du métier et en conséquence, l'invention n'est pas limitée à un type particulier de systèmes.

Les caoutchoucs peuvent être modifiés par l'addition de charges telles que le noir de carbone, la silice, le kaolin, l'oxyde d'aluminium, l'argile, le talc, la craie, etc. Ces charges peuvent être traitées en surface par des silanes, des polyéthylèneglycols ou toute autre molécule de couplage. En général, le taux de charges en parties en poids est compris entre 5 et 100 pour 100 parties d'élastomères.

En outre, les compositions peuvent être assouplies par des plastifiants tels que les huiles minérales dérivées du pétrole, les esters de l'acide phtalique ou de l'acide sébacique, le plastifiants polymères liquides tels que le polybutadiène de faible masse éventuellement carboxylé, et d'autres plastifiants bien connus de l'homme du métier.

Le caoutchouc est par exemple un caoutchouc nitrile de formule: 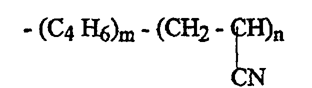 qui comporte de préférence des groupes carboxyle. Un tel caoutchouc nitrile carboxylé a la formule suivante (qu'on désigne par X-NBR):

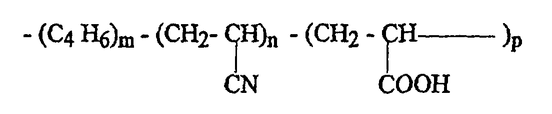

Lorsque les revêtements 4,5 sont en caoutchouc non fonctionnalisé, les couches 2,3 sont solidarisées au moyen d'un adhésif 6,7 placé sur les faces externes des couches 2,3. Un tel adhésif est choisi de façon à ne pas agir sur les propriétés physiques et /ou chimiques du film formé par la pellicule 1 et les couches 2,3. Ainsi, l'adhésif ne comportera pas de solvants polaires du type alcool comme l'éthanol, et on utilisera un adhésif comportant un solvant non polaire du type xylène ou cétone.

L'invention concerne en outre un procédé de fabrication d'une membrane telle que décrite ci-dessus.

On effectue une coextrusion directe d'un copolymère d'éthylène et d'alcool vinylique avec un polyéther bloc amide pour obtenir un film comportant trois couches, d'épaisseur totale comprise entre 0,425 et 1,3 mm. Le film est tel que la pellicule centrale 1 a une épaisseur comprise entre 25 et 100 micromètres et est recouverte de chaque côté d'un matériau souple 2,3 d'une épaisseur comprise entre 200 et 600 micromètres. Ce film ne contient pas de plastifiant et peut être plus facilement stocké et conditionné et présente un meilleur vieillissement à chaud.

Eventuellement un liant de coextrusion peut être disposé entre la pellicule et chaque couche de polyéther bloc amide.

Il est recommandé de sécher le film afin d'éliminer les traces d'eau contenues dans le PEBA et d'améliorer la cohésion entre la pellicule 1 et les couches 2,3. Le séchage est fait à une température de 70 °C, pendant 24 heures. La température de fusion du film est supérieure à 160 °C pour assurer sa mise en oeuvre postérieure et sa tenue pendant son utilisation ultérieure.

Si nécessaire, on thermoforme le film pour lui donner la forme désirée, pour qu'elle s'adapte dans l'accumulateur hydropneumatique auquel elle est destinée.

On dépose éventuellement un adhésif sur les faces externes du film, puis on effectue un moulage et une vulcanisation du caoutchouc sur le film. Le moulage avec le caoutchouc est réalisé à une température inférieure à la température de fusion du film, par exemple inférieure à 160 °C.

On peut utiliser un caoutchouc nitrile carboxylé et dans ce cas, on ne dépose pas d'adhésif sur les faces externes de la membrane. Le caoutchouc non vulcanisé est moulé sur le film, c'est-à-dire sur au moins une des couches du matériau souple et élastique éventuellement recouverte d'un adhésif Le caoutchouc qu'on surmoule est plus exactement un mélange contenant l'élastomère de base (par exemple le X-NBR), des agents vulcanisants et des charges. La vulcanisation s'effectue à une température inférieure à la température de fusion du film. On porte donc l'ensemble du film recouvert du caoutchouc à vulcaniser à une température suffisante pour vulcaniser mais inférieure à la température de fusion du film.

La température de fusion de la pellicule et celle des couches du matériau souple est en général de l'ordre de 140 à 170 °C. La durée de la vulcanisation peut être comprise entre quelques minutes et 15 minutes.

Avantageusement, la cinétique mesurée à l'aide d'un rhéomètre oscillant sera telle que le temps caractéristique de vulcanisation à 90 %, t₉₀, ne dépasse pas 15 minutes et avantageusement sera compris entre 5 et 10 minutes.

Par ailleurs, il a été trouvé que le temps de démarrage de vulcanisation (ou temps de prise) correspondant à une augmentation de couple de 0,2 N.m était un facteur important pour obtenir des matériaux présentant de bonnes performances. Ainsi, il est avantageux que l'augmentation de couple précité soit atteinte dans un temps supérieur ou égal à 4 minutes à la température de moulage et de préférence entre 4 et 5 minutes.

La demanderesse a constaté que si la vulcanisation était trop rapide il n'y avait pas une bonne adhérence sur le film.

S'agissant du film dont les couches du matériau souple et élastique est du PEBA, on effectue avantageusement la vulcanisation à une température proche du point VICAT du PEBA.

Le point VICAT ou encore point de ramollissement est un paramètre bien connu pour mesurer les propriétés physiques d'un polymère. Le point VICAT est la température à laquelle une aiguille ayant une section transversale circulaire de 1 mm² pénètre de 1 mm de profondeur dans l'échantillon lors d'une montée de température de 50 °C par heure selon la norme ASTM D1525. Ainsi, à cette température, le polymère ne flue pas et n'est pas à l'état fondu.

Le moulage suivi de la vulcanisation est décrit dans les brevets EP-A-550 346 et EP-A-607 085 dont le contenu est incorporé dans la présente demande.

S'agissant des PEBA dont les blocs sont en PA-6 et en PTMG, la demanderesse a trouvé qu'on pouvait effectuer la vulcanisation dans une plage de température beaucoup plus large autour du point VICAT, il est donc encore plus facile de s'éloigner du point de fusion du PEBA. Cette technique est décrite dans le brevet EP-A-682 060 dont le contenu est incorporé dans la présente demande.

## Revendications

1. Accumulateur hydropneumatique, du type comprenant au moins une sphère dont la cavité interne est subdivisée en deux chambres dont l'une contient un gaz et l'autre un liquide, par une membrane élastique imperméable aux gaz et au liquide, **caractérisé en ce que** la dite membrane comprend au moins un film formé par coextrusion:
- d'une pellicule (1) d'un copolymère imperméable aux gaz, comportant des groupes OH,
- de deux couches (2,3) entre lesquelles est incorporée la pellicule (1) et constituées d'un matériau souple et élastique d'un copolymère comportant un seul type de blocs polyamides et de blocs polyéthers, la quantité en poids de polyamide et la quantité en poids de polyéther étant dans le rapport polyamide/polyéther de 1/1 à 3/1.

2. Accumulateur hydropneumatique selon la revendication 1, **caractérisé en ce que** la masse molaire en nombre Mₙ des séquences polyamides des blocs polyamides est comprise entre 600 et 5000 et **en ce que** la masse molaire en nombre Mₙ des séquences polyéthers des blocs polyéthers est comprise entre 200 et 3000.

3. Accumulateur hydropneumatique selon la revendication 1 ou 2, **caractérisé en ce que** les blocs polyéthers contiennent des motifs dérivés de l'éthylène glycol, du propylène glycol ou du tétraméthylène glycol.

4. Accumulateur hydropneumatique selon la revendication 3, **caractérisé en ce que** les blocs polyéthers sont constitués par des blocs polytétraméthylène glycol.

5. Accumulateur hydropneumatique selon la revendication 4, **caractérisé en ce que** les polymères à blocs polytétraméthylène glycol sont associés à des polymères à blocs PA-6 ou PA-12.

6. Accumulateur hydropneumatique selon l'une quelconque des revendications précédentes, **caractérisé en ce que** la pellicule (1) est constituée d'un copolymère de l'éthylène et de l'alcool polyvinylique.

7. Accumulateur hydropneumatique selon la revendication 1 **caractérisé en ce que** :
les deux couches (2,3) dudit matériau souple comportent des blocs en polytétraméthylène glycol et en PA-6.

8. Accumulateur hydropneumatique selon l'une quelconque des revendications précédentes **caractérisé en ce que** ladite pellicule centrale (1) a une épaisseur comprise entre 25 et 100 micromètres et est recouverte de chaque côté dudit matériau souple (2,3) d'une épaisseur comprise entre 200 et 600 micromètres.

## Patentansprüche

1. Hydropneumatischer Akkumulator des Typs, der mindestens eine Kugel umfaßt, deren innere Aussparung durch eine gasundurchlässige und flüssigkeitsundurchlässige elastische Membran in zwei Kammern unterteilt ist, wobei eine Kammer ein Gas und die andere Kammer eine Flüssigkeit enthält, **dadurch gekennzeichnet, daß** die Membran mindestens einen Film enthält, der durch Coextrusion:
- einer Sperrschicht (1) eines gasundurchlässigen Copolymers, das OH-Gruppen aufweist, und
- von zwei Schichten (2, 3) gebildet wird, die aus einem weichen und elastischen Material eines Copolymers bestehen, das nur einen Typ von Polyamidblöcken und Polyetherblöcken aufweist, wobei die Sperrschicht (1) zwischen diese Schichten eingefügt ist und wobei die Gewichtsmenge des Polyamids und die Gewichtsmenge des Polyethers so ausgewählt sind, daß das Verhältnis Polyamid/Polyether im Bereich von 1/1 bis 3/1 liegt.

2. Hydropneumatischer Akkumulator nach Anspruch 1, **dadurch gekennzeichnet, daß** das Zahlenmittel des Molekulargewichts Mₙ der Polyamidsequenzen der Polyamidblöcke im Bereich von 600 bis 5000 liegt, und dadurch, daß das Zahlenmittel des Molekulargewichts Mₙ der Polyethersequenzen der Polyetherblöcke im Bereich von 200 bis 3000 liegt.

3. Hydropneumatischer Akkumulator nach Anspruch 1 oder 2, **dadurch gekennzeichnet, daß** die Polyetherblöcke Einheiten enthalten, die von Ethylenglykol, Propylenglykol oder Tetramethylenglykol abgeleitet sind.

4. Hydropneumatischer Akkumulator nach Anspruch 3, **dadurch gekennzeichnet, daß** die Polyetherblöcke aus Polytetramethylenglykolblöcken bestehen.

5. Hydropneumatischer Akkumulator nach Anspruch 4, **dadurch gekennzeichnet, daß** die Polymere mit Polytetramethylenglykolblöcken mit Polymeren mit PA-6- oder PA-12-Blöcken kombiniert sind.

6. Hydropneumatischer Akkumulator nach einem der vorhergehenden Ansprüche, **dadurch gekennzeichnet, daß** die Sperrschicht (1) aus einem Copolymer von Ethylen und Polyvinylalkohol besteht.

7. Hydropneumatischer Akkumulator nach Anspruch 1, **dadurch gekennzeichnet, daß** die beiden Schichten (2, 3) des weichen Materials Blöcke aus Polytetramethylenglykol und aus PA-6 enthalten.

8. Hydropneumatischer Akkumulator nach einem der vorhergehenden Ansprüche, **dadurch gekennzeichnet, daß** die zentrale Sperrschicht (1) eine Dicke von 25 bis 100 µm aufweist und an jeder Seite von dem weichen Material (2, 3) bedeckt ist, das eine Dicke im Bereich von 200 bis 600 µm aufweist.

## Claims

1. Hydropneumatic accumulator, of the type comprising at least one sphere, the internal cavity of which is subdivided into two chambers, one of which contains a gas and the other a liquid, by a resilient membrane impermeable to gases and to liquid, **characterised in that** said membrane comprises at least one film formed by coextrusion:
- of a skin (1) of a copolymer impermeable to gases, comprising OH groups,
- of two layers (2, 3) between which the skin (1) is incorporated, which are constituted by a flexible, resilient material made of a copolymer having a single type of polyamide blocks and polyether blocks, the quantity by weight of polyamide and the quantity by weight of polyether being in the polyamide/polyether ratio of 1/1 to 3/1.

2. Hydropneumatic accumulator according to Claim 1, **characterised in that** the molar mass by number Mₙ of polyamide sequences of the polyamide blocks is comprised between 600 and 5000 and **in that** the molar mass by number Mₙ of polyether sequences of the polyether blocks is comprised between 200 and 3000.

3. Hydropneumatic accumulator according to Claim 1 or 2, **characterised in that** the polyether blocks contain units derived from ethylene glycol, propylene glycol or tetramethylene glycol.

4. Hydropneumatic accumulator according to Claim 3, **characterised in that** the polyether blocks are constituted by polytetramethylene glycol blocks.

5. Hydropneumatic accumulator according to Claim 4, **characterised in that** the polymers with polytetramethylene glycol blocks are associated with polymers with PA-6 or PA-12 blocks.

6. Hydropneumatic accumulator according to any one of the preceding claims, **characterised in that** the skin (1) is constituted by a copolymer of ethylene and polyvinyl alcohol.

7. Hydropneumatic accumulator according to Claim 1, **characterised in that** the two layers (2, 3) of said flexible material have blocks of polytetramethylene glycol and PA-6.

8. Hydropneumatic accumulator according to any one of the preceding claims **characterised in that** said central skin (1) has a thickness of between 25 and 100 microns and is covered on either side by said flexible material (2, 3) in a thickness of between 200 and 600 microns.
